# FASCICULE DE BREVET EUROPEEN

(11) **EP 4 081 426 B1**
(45) Date de publication et mention de la délivrance du brevet: **06.08.2025**
(21) Numéro de dépôt: 20817023.3
(22) Date de dépôt: 07.12.2020
(51) Int. Cl.: B60S 1/48, B60S 1/56, F16K 31/06

(54) **VANNE POUR SYSTEME DE PROJECTION**
VENTIL FÜR EIN SPRÜHSYSTEM
VALVE FOR A SPRAY SYSTEM

(30) Priorité: 27.12.2019 FR 1915698
(43) Date de publication de la demande: 02.11.2022
(73) Titulaire: Valeo Systèmes d'Essuyage, 78322 Le Mesnil Saint Denis (FR)
(72) Inventeur: JULLIEN, Theophile, 78322 LE MESNIL SAINT DENIS (FR)
(74) Mandataire: Valeo Visibility
(86) Numéro de dépôt international: PCT/EP2020/084958
(87) Numéro de publication internationale: WO 2021/130010

(56) Documents cités:
- EP-A1- 3 521 580
- EP-A1- 4 118 369
- WO-A1-2018/188823
- WO-A1-2021/181333

## Description

### DOMAINE TECHNIQUE

La présente invention concerne le domaine des systèmes de projection de liquide de nettoyage des véhicules automobiles et en particulier les vannes utilisées dans ces systèmes.

### TECHNIQUE ANTERIEURE

Les véhicules automobiles possèdent tous un système de projection de liquide de nettoyage pour maintenir le pare-brise du véhicule propre et permettre une vision optimale du conducteur vers l'extérieur. D'autres dispositifs optiques, tels que des capteurs, peuvent également nécessiter de tels systèmes de projection.

Ces systèmes comprennent généralement un réservoir de liquide de nettoyage, une pompe et au moins une vanne configurée pour autoriser ou bloquer le passage du liquide de nettoyage vers les différents embouts de projection ou gicleurs.

L'un des problèmes avec les vannes hydrauliques placées dans le circuit hydraulique des systèmes de projection est le risque de dysfonctionnement des vannes lié au givrage des vannes. De plus, en cas de températures très basses, le liquide de nettoyage présent dans la vanne peut geler ce qui peut alors conduire à une détérioration de la vanne du fait de la dilatation de l'eau lorsqu'elle gèle, provoquant une panne du système de projection de liquide nettoyant.

Afin d'éviter une telle détérioration des vannes en cas de gel, il convient donc de trouver une solution permettant de protéger les vannes électromagnétiques dans les systèmes de projection de liquide de nettoyage des véhicules automobiles en cas de gel.

Un système de projection d'un liquide de nettoyage tel que connu dans l'état de la technique est divulgué dans le document WO 2018/188823 A1.

### RESUME DE L'INVENTION

A cet effet, il est proposé un système de projection d'un liquide de nettoyage comprenant un réservoir de liquide, une pompe, au moins un embout de projection de liquide de nettoyage et au moins une vanne, ladite vanne comprenant :
- un corps de vanne renfermant une cavité hydraulique configurée pour être reliée fluidiquement à un canal hydraulique du système de projection et destiné à recevoir le liquide de nettoyage,
- un plongeur configuré pour être déplacé dans la cavité hydraulique entre une position d'ouverture dans laquelle il laisse passer le liquide de nettoyage dans le canal hydraulique et une position de fermeture dans laquelle il bloque le passage du liquide de nettoyage à travers le canal hydraulique, la vanne comprenant également un élément élastique compressible renfermant un gaz disposé dans la cavité hydraulique et configuré pour être comprimé en cas de gel du liquide de nettoyage dans la vanne.

Selon un mode de réalisation, l'élément élastique compressible renfermant un gaz est une mousse à cellules fermées.

la mousse à cellule fermées est réalisée en éthylène-propylène-diène-monomère « EPDM ». Selon un mode de réalisation, le volume de mousse correspond à au moins 10 % du volume de la cavité hydraulique, notamment 10 % du volume de la cavité hydraulique.

Selon un mode de réalisation, la vanne est une vanne électromagnétique comprenant également :
- une bobine (13) configurée pour déplacer le plongeur (7) de la position de fermeture à la position d'ouverture.

Selon un mode de réalisation, la cavité hydraulique comprend une première portion entourée par la bobine et une deuxième portion distincte de la première portion et dans laquelle l'élément élastique compressible renfermant un gaz est disposé dans la deuxième portion de la cavité hydraulique.

Selon un mode de réalisation, l'élément élastique compressible renfermant le gaz est fixé sur le plongeur.

Selon un mode de réalisation, le plongeur comprend une première portion configurée pour venir en contact avec le corps de vanne en position de fermeture et dans laquelle l'élément élastique compressible renfermant le gaz est fixé sur le plongeur au niveau d'une deuxième portion distincte de la première portion.

### BREVE DESCRIPTION DES DESSINS

D'autres caractéristiques et avantages de l'invention apparaîtront plus clairement à la lecture de la description suivante, donnée à titre d'exemple illustratif et non limitatif et des dessins annexés parmi lesquels :
[Fig.1] représente une représentation schématique d'un système de projection de liquide de nettoyage selon un mode de réalisation de la présente invention.
[Fig.2] représente une vue schématique en coupe d'une électrovanne à l'état fermé selon un mode de réalisation de la présente invention;
[Fig.3] représente une vue schématique en perspective d'une électrovanne;
[Fig.4] représente une vue schématique en coupe d'une électrovanne à l'état ouvert selon un mode de réalisation de la présente invention;

Dans ces figures, les éléments identiques portent les mêmes références.

### DESCRIPTION DETAILLEE

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations, dans la mesure où elles entrent dans le champ de protection des revendications.

Des modes de mise en œuvre et de réalisation de l'invention concernent un système de projection de liquide.

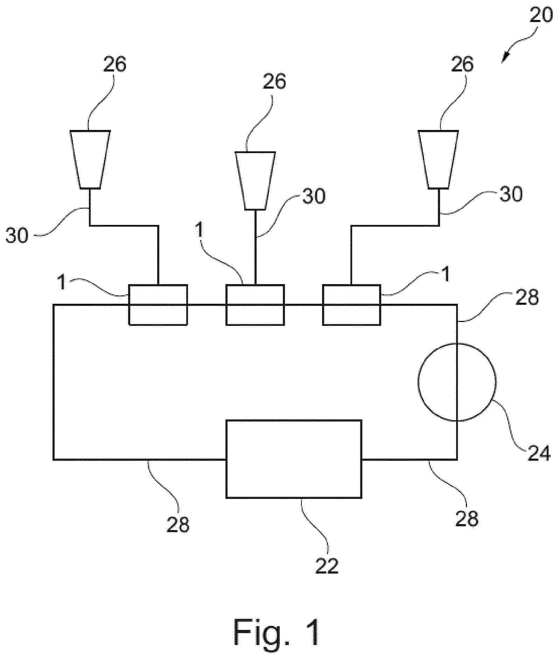

La figure 1 représente un exemple de réalisation d'un système de projection 20 comprenant un réservoir de liquide 22, une pompe 24, trois embouts de projection 26 de liquide de nettoyage configurés par exemple pour pulvériser un liquide de nettoyage sur le pare-brise ou sur des éléments optiques d'un véhicule automobile. Le système de projection 20 comprend également trois vannes 1 pour contrôler la distribution du liquide de nettoyage vers les embouts de projection 26. Les vannes 1 sont reliées au réservoir 22 par des durites d'approvisionnement 28 et les embouts de projection 26 sont reliés aux vannes 1 par des durites de distribution 30.

Les vannes 1 sont par exemple des vannes électromagnétiques comprenant une bobine dont l'alimentation permet de contrôler le déplacement d'un plongeur comme celle décrite dans la suite de la description. Cependant, l'invention ne se limite pas à des vannes électromagnétiques et peut aussi être appliquée à d'autres types de vannes.

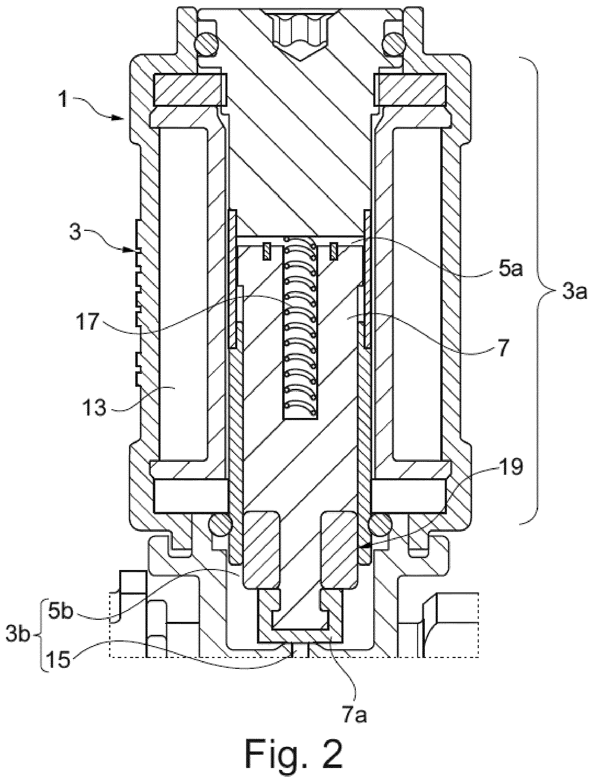

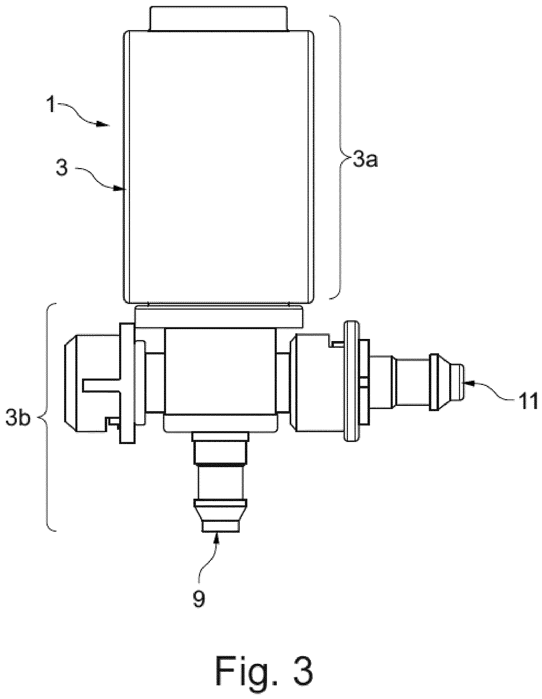

La figure 2 représente une vue en coupe de la vanne électromagnétique 1 montrant les éléments internes de la vanne électromagnétique 1 et la figure 3 représente une vue en perspective d'une vanne électromagnétique 1. La vanne électromagnétique 1 est configurée pour être disposée dans un système de projection 20 d'un liquide de nettoyage tel que représenté sur la figure 1.

La vanne électromagnétique 1 comprend un corps de vanne 3 renfermant une cavité hydraulique 5 dans laquelle est positionné un plongeur 7. Le corps de vanne 3 comprend une première partie 3a comprenant une bobine 13 disposée autour d'une première portion 5a de la cavité hydraulique 5 et une deuxième partie 3b dans laquelle sont ménagés un premier orifice 9 correspondant à un orifice d'entrée du fluide et un deuxième orifice 11 correspondant à un orifice de sortie du fluide et renfermant une deuxième portion 5b de la cavité hydraulique 5. Le premier orifice 9 est configuré pour être raccordé à une durite d'approvisionnement 28 du fluide, par exemple un liquide de nettoyage ou de lavage. La durite d'approvisionnement 28 est par exemple reliée à un réservoir 22 de liquide de nettoyage via une pompe d'alimentation 24 permettant l'approvisionnement du liquide de nettoyage.

Le deuxième orifice 11 est configuré pour être raccordé à un embout de projection 26 via une durite de distribution 30.

La vanne électromagnétique 1 comprend également un canal hydraulique 15 reliant le premier orifice 9 et le deuxième orifice 11, ledit canal hydraulique 15 étant en relation fluidique avec la cavité hydraulique 5 dans laquelle est disposé le plongeur 7 (le canal hydraulique 15 est donc confondu localement avec la deuxième portion 5b de la cavité hydraulique 5). Le canal hydraulique 15 est configuré pour être prolongé de part et d'autre de la vanne électromagnétique 1, notamment via les durites 28, 30, de manière à transmettre le liquide de nettoyage depuis le réservoir 22 jusqu'à un embout de projection 26.

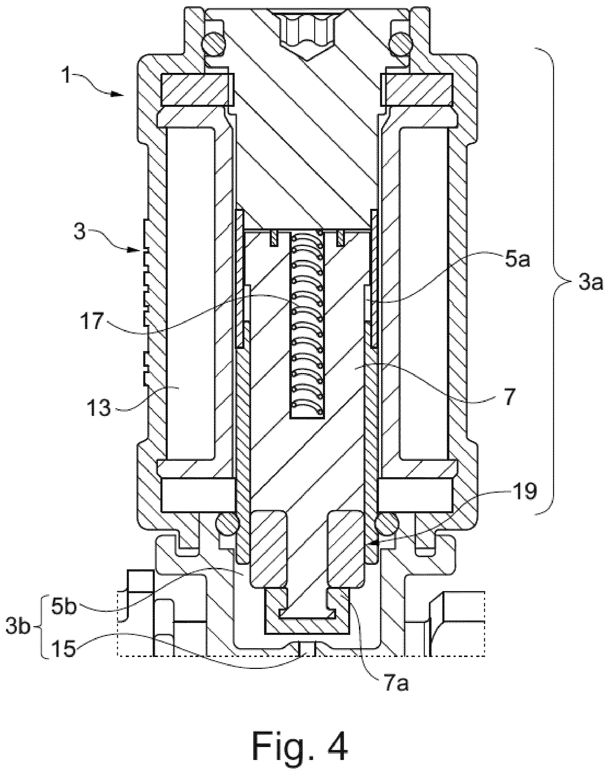

Le plongeur 7 est configuré pour se déplacer entre une position d'ouverture (représentée sur la figure 4) dans laquelle il laisse passer le liquide de nettoyage entre la durite d'approvisionnement 28 et la durite de distribution 30 et une position de fermeture (représentée sur la figure 2) dans laquelle il bloque le passage du liquide de nettoyage entre la durite d'approvisionnement 28 et la durite de distribution 30.

Le plongeur 7 comprend une première portion 7a, correspondant à une extrémité souple dans le cas présent, par exemple une extrémité en élastomère ou en caoutchouc pour permettre une bonne étanchéité en position de fermeture, la première portion 7a venant en contact avec une paroi du corps de vanne 3 en position de fermeture pour bloquer le passage du liquide de nettoyage à travers le canal hydraulique 15, c'est-à-dire entre le premier orifice 9 et le deuxième orifice 11. Le déplacement du plongeur 7 de la position de fermeture à la position d'ouverture est réalisé via l'alimentation de la bobine 13 (par exemple au-dessus d'un seuil de tension prédéterminé). Un élément de contrainte élastique 17, par exemple un ressort hélicoïdal, peut être disposé entre le corps de vanne 3 (ou un élément fixe par rapport au corps de vanne 3) et le plongeur 7 et configuré pour contraindre le plongeur 7 en position de fermeture en l'absence d'alimentation de la bobine 13 (ou en cas d'alimentation inférieure au seuil de tension prédéterminé).

De plus, pour éviter un endommagement du corps de vanne 3 lorsque le liquide de nettoyage à l'intérieur de la cavité hydraulique 5 vient à geler, par exemple lorsque les températures extérieures sont inférieures à 0°C, la vanne électromagnétique 1 comprend également un élément élastique compressible 19 renfermant un gaz, par exemple de l'air, et disposé dans la cavité hydraulique 5. Cet élément élastique compressible 19 est par exemple une mousse à cellules fermées et agit comme un coussin compressible.

L'élément élastique compressible 19 est par exemple fixé sur la paroi de la cavité hydraulique 5 ou sur le plongeur 7. La fixation de l'élément élastique compressible 19 est par exemple réalisée par collage. L'élément élastique compressible 19 occupe par exemple au moins 10 % du volume de la cavité hydraulique 5 (lorsqu'il n'est pas comprimé) ce qui correspond au volume supplémentaire pris par la glace par rapport à l'eau. Ce volume peut également être égal à 10 % du volume de la cavité voire légèrement moins en fonction du liquide de nettoyage utilisé.

Dans le cas d'une vanne électromagnétique 1, l'élément élastique compressible 19 est de préférence situé à distance de la bobine 13, c'est-à-dire en dehors de la première portion 5a de la cavité hydraulique 5 entourée par la bobine 13 de manière à éviter toute perturbation du fonctionnement électromagnétique de la vanne 1.

L'élément élastique compressible 19 est, de préférence, positionné de manière distante par rapport aux zones d'interface entre des pièces mobiles les unes par rapport aux autres pour éviter toute détérioration de l'élément élastique compressible 19 par frottement mécanique dû au contact avec les différentes pièces. Lorsque l'élément élastique compressible est fixé sur le plongeur 7, l'élément élastique compressible 19 est par exemple est fixé sur une deuxième portion distincte de la première portion 7a et notamment à distance de la partie de la première portion 7a venant en contact avec une paroi du corps de vanne 3.

La mousse à cellules fermées de l'élément élastique compressible 19 est par exemple réalisée en éthylène-propylène-diène-monomère, plus couramment appelé EPDM.

Ainsi, en cas de gel du liquide de nettoyage dans le corps de vanne 3, la glace vient comprimer en priorité l'élément élastique compressible 19 qui est plus souple que les parois du corps de vanne 3 ou du plongeur 7 ce qui permet de protéger ces derniers.

La présente invention concerne également un système de projection 20 d'un liquide de nettoyage comprenant un réservoir de liquide 22, une pompe 24, au moins un embout de projection de liquide de nettoyage 26 et au moins une vanne 1 telle que décrite précédemment.

## Revendications

1. Système de projection d'un liquide de nettoyage (20) comprenant un réservoir de liquide (22), une pompe (24), au moins un embout de projection de liquide de nettoyage (26) et au moins une vanne (1) , ledit système étant **caractérisé en ce que** ladite vanne (1) comprend:
- un corps de vanne (3) renfermant une cavité hydraulique (5) configurée pour être reliée fluidiquement à un canal hydraulique (15) du système de projection et destiné à recevoir le liquide de nettoyage,
- un plongeur (7) configuré pour être déplacé dans la cavité hydraulique (5) entre une position d'ouverture dans laquelle il laisse passer le liquide de nettoyage dans le canal hydraulique (15) et une position de fermeture dans laquelle il bloque le passage du liquide de nettoyage à travers le canal hydraulique (15),
et
**en ce que** la vanne (1) comprend également un élément élastique compressible (19) renfermant un gaz disposé dans la cavité hydraulique (5) et configuré pour être comprimé en cas de gel du liquide de nettoyage dans la vanne (1).

2. Système (20) selon la revendication 1 dans lequel l'élément élastique compressible (19) renfermant un gaz est une mousse à cellules fermées.

3. Système (20) selon la revendication 2 dans laquelle la mousse à cellule fermées est réalisée en éthylène-propylène-diène-monomère « EPDM ».

4. Système (20) selon la revendication 2 ou 3 dans laquelle le volume de mousse correspond à au moins 10 % du volume de la cavité hydraulique (5), notamment 10 % du volume de la cavité hydraulique (5).

5. Système (20) selon la revendication 1 qui est une vanne électromagnétique comprenant également :
- une bobine (13) configurée pour déplacer le plongeur (7) de la position de fermeture à la position d'ouverture.

6. Système (20) selon la revendication 5 dans laquelle la cavité hydraulique (5) comprend une première portion (5a) entourée par la bobine (13) et une deuxième portion (5b) distincte de la première portion (5a) et dans laquelle l'élément élastique compressible (19) renfermant un gaz est disposé dans la deuxième portion (5b) de la cavité hydraulique (5).

7. Système (20) selon l'une des revendications précédentes dans lequel l'élément élastique compressible (19) renfermant le gaz est fixé sur le plongeur (7).

8. Système (20) selon la revendication précédente dans laquelle le plongeur (7) comprend une première portion (7a) configurée pour venir en contact avec le corps de vanne (3) en position de fermeture et dans laquelle l'élément élastique compressible (19) renfermant le gaz est fixé sur le plongeur (7) au niveau d'une deuxième portion distincte de la première portion (7a).

## Patentansprüche

1. System zum Sprühen einer Reinigungsflüssigkeit (20), umfassend einen Flüssigkeitsbehälter (22), eine Pumpe (24), mindestens einen Reinigungsflüssigkeitssprühkopf (26) und mindestens ein Ventil (1), wobei das System **dadurch gekennzeichnet, ist, dass** das Ventil (1) Folgendes umfasst:
- einen Ventilkörper (3), der einen hydraulischen Hohlraum (5) umschließt, der dazu ausgelegt ist, fluidisch mit einem hydraulischen Kanal (15) des Sprühsystems verbunden zu sein, und dazu bestimmt ist, die Reinigungsflüssigkeit aufzunehmen,
- einen Kolben (7), der dazu ausgelegt ist, im hydraulischen Hohlraum (5) zwischen einer Öffnungsposition, in der er die Reinigungsflüssigkeit in den hydraulischen Kanal (15) gelangen lässt, und einer Schließposition, in der er den Durchgang der Reinigungsflüssigkeit durch den hydraulischen Kanal (15) blockiert, bewegt zu werden, und dass das Ventil (1) außerdem ein komprimierbares elastisches Element (19) umfasst, das ein im hydraulischen Hohlraum (5) angeordnetes Gas umschließt und dazu ausgelegt ist, im Falle des Einfrierens der Reinigungsflüssigkeit im Ventil (1) komprimiert zu werden.

2. System (20) nach Anspruch 1, wobei das komprimierbare elastische Element (19), das ein Gas umschließt, ein geschlossenzelliger Schaum ist.

3. System (20) nach Anspruch 2, wobei der geschlossenzellige Schaum aus Ethylen-Propylen-Dien-Monomer (EPDM) gefertigt ist.

4. System (20) nach Anspruch 2 oder 3; wobei das Schaumvolumen mindestens 10 % des Volumens des hydraulischen Hohlraums (5), insbesondere 10 % des Volumens des hydraulischen Hohlraums (5), entspricht.

5. System (20) nach Anspruch 1, das ein elektromagnetisches Ventil ist, das ferner Folgendes umfasst:
- eine Spule (13), die dazu ausgelegt ist, den Kolben (7) aus der Schließposition in die Öffnungsposition zu bewegen.

6. System (20) nach Anspruch 5, wobei der hydraulische Hohlraum (5) einen ersten von der Spule (13) umgebenen Abschnitt (5a) und einen vom ersten Abschnitt (5a) getrennten zweiten Abschnitt (5b) umfasst und wobei das komprimierbare elastische Element (19), das ein Gas umschließt, im zweiten Abschnitt (5b) des hydraulischen Hohlraums (5) angeordnet ist.

7. System (20) nach einem der vorangehenden Ansprüche, wobei das komprimierbare elastische Element (19), das das Gas umschließt, am Kolben (7) befestigt ist.

8. System (20) nach dem vorangehenden Anspruch, wobei der Kolben (7) einen ersten Abschnitt (7a) umfasst, der dazu ausgelegt ist, in der Schließposition mit dem Ventilkörper (3) in Kontakt zu kommen, und wobei das komprimierbare elastische Element (19), das das Gas umschließt, an einem vom ersten Abschnitt (7a) getrennten zweiten Abschnitt am Kolben (7) befestigt ist.

## Claims

1. System for spraying a cleaning liquid (20), comprising a liquid reservoir (22), a pump (24), at least one endpiece for spraying cleaning liquid (26), and at least one valve (1), said system being **characterized in that** said valve (1) comprises:
- a valve body (3) including a hydraulic cavity (5) configured to be fluidically connected to a hydraulic channel (15) of the spray system and intended to receive the cleaning liquid,
- a plunger (7) configured to be displaced in the hydraulic cavity (5) between an open position, in which it allows the cleaning liquid to enter the hydraulic channel (15), and a closed position, in which it prevents the cleaning liquid from passing through the hydraulic channel (15),
and **in that** the valve (1) also comprises a compressible elastic element (19) containing a gas disposed in the hydraulic cavity (5) and configured to be compressed if the cleaning liquid in the valve (1) freezes.

2. System (20) according to Claim 1, wherein the compressible elastic element (19) containing a gas is a closed-cell foam.

3. System (20) according to Claim 1 or 2, wherein the closed-cell foam is made from ethylene-propylene-diene monomer "EPDM".

4. System (20) according to one of the preceding claims, wherein the volume of foam corresponds to at least 10% of the volume of the hydraulic cavity (5), in particular 10% of the volume of the hydraulic cavity (5).

5. System (20) according to Claim 1, which is an electromagnetic valve also comprising:
- a coil (13) configured to displace the plunger (7) from the closed position to the open position.

6. System (20) according to Claim 5, wherein the hydraulic cavity (5) comprises a first portion (5a), surrounded by the coil (13), and a second portion (5b) separate from the first portion (5a), and wherein the compressible elastic element (19) containing a gas is disposed in the second portion (5b) of the hydraulic cavity (5).

7. System (20) according to one of the preceding claims, wherein the compressible elastic element (19) containing the gas is fixed on the plunger (7).

8. System (20) according to the preceding claim, wherein the plunger (7) comprises a first portion (7a) configured to come into contact with the valve body (3) in the closed position, and wherein the compressible elastic element (19) containing the gas is fixed on the plunger (7) at a second portion separate from the first portion (7a).
